# EUROPEAN PATENT APPLICATION

(11) **EP 2 302 945 A1**
(43) Date of publication of application: **30.03.2011**
(21) Application number: 09797987.6
(22) Date of filing: 17.07.2009
(51) Int. Cl.: H04N 13/04, G11B 20/10, H04N 5/93

(54) **DATA STRUCTURE, REPRODUCTION DEVICE, METHOD, AND PROGRAM**

(30) Priority: 18.07.2008 JP 2008187427
(71) Applicant: Sony Corporation, Tokyo 108-0075 (JP)
(72) Inventor: OGATA Masami, Tokyo 108-0075 (JP); YONEMITSU Jun, Tokyo 108-0075 (JP); KATO Motoki, Tokyo 108-0075 (JP)
(74) Representative: Körber, Martin Hans
(86) International application number: PCT/JP2009/062940
(87) International publication number: WO 2010/008063

(57) **Abstract**

The present invention relates to a data structure, a reproducing apparatus, a reproducing method, and a program which are applicable to various types of display and which facilitates signal processing performed in the displays. In a 3D video format according to the present invention, a base signal BS of a side-by-side image SbSP and an optional signal OS of a sub-image SuP obtained by collectively arranging three images described below regarding an L image LP of the side-by-side image SbSP are used. That is, the sub-image SuP includes a Depth image of the L image, an image hidden behind an object included in the L image, and a Depth image of the mage hidden behind the object. The present invention is applicable to 3D displays.

## Description

### Technical Field

The present invention relates to data structures, reproducing apparatuses, reproducing methods, and programs. The present invention particularly relates to a data structure, a reproducing apparatus, a reproducing method, and a program which are applicable to a display employing an LR image display method (a polarization filter method, a liquid crystal shutter method, or the like) and a display using an image viewed from at least three viewpoints (Multi-views) (a lenticular method) in common and which are capable of providing a 3D video format which facilitates signal processing performed in the displays.

### Background Art

In general, various types of display apparatus having a function of displaying a 3D (three Dimensional) video image (hereinafter referred to as a "3D display apparatus") have been used. Furthermore, various types of video format for 3D display (hereinafter referred to as a 3D video format) have been used.

Therefore, a large number of combinations of a type of a 3D display apparatus and a 3D video format may be notionally used. However, optimum combinations which facilitate and optimize signal processing for video display should be employed.

For example, a 3D video format using an image for a left eye (hereinafter referred to as an "L image") and an image for a right eye (hereinafter referred to as an "R image") is suitable for a 3D display apparatus employing a polarized filter method and a 3D display apparatus employing a liquid crystal shutter method. Note that, hereinafter, such 3D display apparatuses are referred to as "3D display apparatuses employing an LR image display method".

Furthermore, for example, a 3D video format using a two-dimensional image and a Depth image is suitable for a 3D display apparatus employing a method using an image viewed from three or more viewpoints (Multi-view), that is, a 3D display apparatus employing a so-called lenticular method, for example (refer to Non Patent Literature 1).

### Citation List

### Non Patent Literature

NPL 1: web site of Royal Philips Electronics > home page > 3D solutions > About, "searched in 7 July, 2008", "http://www.business-sites.philips.com/3dsolutions/about/Index.html"

### Summary of Invention

### Technical Problem

However, a 3D video format which is suitably used for different types of 3D display in common and which facilitates signal processing for display has not been developed.

For example, as described above, 3D display apparatuses employing the LR image display method which have been used by general people basically employ the 3D video format using an L image and an R image. Therefore, if a 3D video image of a 3D video format using a two-dimensional image and a Depth image is to be displayed in the 3D display apparatus employing the LR image display method, a function of generating an L image and an R image on the basis of the 3D video format is required. However, additional implementation of this function is not realistic due to a large burden of the implementation. That is, the 3D video format using a two-dimensional image and a Depth image is not suitable for the 3D display apparatus employing the LR image display method.

On the other hand, for example, when a 3D video image of the 3D video format using an L image and an R image is to be displayed in a 3D display apparatus employing a lenticular method, a function of generating a two-dimensional image and a Depth image on the basis of the video format is required. However, it is technically difficult to realize this function. That is, the 3D video format using an L image and an R image is not suitable for the display employing the lenticular method. Similarly, the 3D video format using an L image and an R image is not suitable for a display employing a method using an image viewed from three or more viewpoints (Multi-views) other than the lenticular method.

Accordingly, realization of a 3D video format which is used for the LR image display method (a polarized filter method, a liquid crystal shutter method, or the like) and the method using an image viewed from three or more viewpoints (Multi-views) in common and which facilitates signal processing for the display has been demanded. However, this demand has not been sufficiently satisfied.

The present invention has been made in view of this situation to provide a 3D video format which may be employed in a display employing the LR image display method (a polarized filter method, a liquid crystal shutter method, or the like) and a display employing the method using an image viewed from three or more viewpoints (Multi-views) in common and which facilitates signal processing for the display. Solution to Problem

According to an embodiment of the present invention, there is provided a data structure including a first data structure which is used in a first 3D (three dimensional) video-image display method in which an L image for a left eye and an R image for a right eye are used and which includes image data corresponding to the L image and image data corresponding to the R image used for display, and a second data structure which is used in a 3D video-image display method in which an image viewed from three or more viewpoints is generated using at least a two-dimensional image and a Depth image and which includes at least image data corresponding to the Depth image when the L image or the R image of the first data structure is employed as the two-dimensional image.

The second data structure may include an image hidden behind an object included in the two-dimensional image and a Depth image of the image hidden behind the object.

According to another embodiment of the present invention, there is provided a data structure including a first data structure which is used in a first 3D (three dimensional) video-image display method in which an L image for a left eye and an R image for a right eye are used and which includes image data corresponding to the L image and image data corresponding to the R image used for display, and a second data structure which is used in a second 3D video-image display method in which an image viewed from three or more viewpoints is generated using at least a two-dimensional image and a Depth image and which includes at least image data corresponding to the Depth image when the L image or the R image of the first data structure is employed as the two-dimensional image.

According to a still another embodiment of the present invention, there is provided a reproducing apparatus, wherein, when image data having a data structure including a first data structure which is used in a first 3D (three dimensional) video-image display method in which an L image for a left eye and an R image for a right eye are used and which includes image data corresponding to the L image and image data corresponding to the R image used for display, and a second data structure which is used in a second 3D video-image display method in which an image viewed from three or more viewpoints is generated using at least a two-dimensional image and a Depth image and which includes at least image data corresponding to the Depth image when the L image or the R image of the first data structure is employed as the two-dimensional image is to be reproduced, the image data corresponding to the L image and the image data corresponding to the R image obtained from among image data of the first data structure are reproduced in a case where a display unit employing the first video-image display method is used, and the image data corresponding to the L image or the R image of the first data structure is reproduced and the Depth image of the second data structure is reproduced in a case where a display unit employing the second video-image display method is used.

The second data structure may further include an image hidden behind an object included in the two-dimensional image and a Depth image of the image hidden behind the object, and the reproducing apparatus reproduces, in addition to the Depth image, the image hidden behind the object and the Depth image of the image hidden behind the object which correspond to image data of the second data structure when the display unit employing the second video-image display method is used.

A reproducing method and a program according to a further embodiment of the present invention correspond to the reproducing apparatus according to the embodiment of the present invention described above.

According to a reproducing apparatus, a reproducing method, and a program, image data having a data structure including a first data structure which is used in a first 3D (three dimensional) video-image display method in which an L image for a left eye and an R image for a right eye are used and which includes image data corresponding to the L image and image data corresponding to the R image used for display, and a second data structure which is used in a second 3D video-image display method in which an image viewed from three or more viewpoints is generated using at least a two-dimensional image and a Depth image and which includes at least image data corresponding to the Depth image when the L image or the R image of the first data structure is employed as the two-dimensional image is reproduced as below. That is, the image data corresponding to the L image and the image data corresponding to the R image obtained from among image data of the first data structure are reproduced in a case where a display unit employing the first video-image display method is used, and the image data corresponding to the L image or the R image of the first data structure is reproduced and the Depth image of the second data structure is reproduced in a case where a display unit employing the second video-image display method is used.

### Advantageous Effects of Invention

According to the present invention, the present invention is applicable to a display employing an LR image display method (a polarization filter method, a liquid crystal shutter method, or the like) and a display using an image viewed from at least three viewpoints (Multi-views) (a lenticular method) in common. Furthermore, signal processing for display is facilitated. Moreover, a 3D video format realizing these functions may be provided.

### Brief Description of Drawings

[Fig. 1] Fig. 1 is a diagram illustrating a 3D video format using an L image and an R image according to the related art.
[Fig. 2] Fig. 2 is a diagram illustrating a 3D video format using a two-dimensional image and a Depth image according to the related art.
[Fig. 3] Fig. 3 is a diagram illustrating the 3D video format using a two-dimensional image and a Depth image according to the related art.
[Fig. 4] Fig. 4 is a diagram illustrating the 3D video format using a two-dimensional image and a Depth image according to the related art.
[Fig. 5] Fig. 5 is a diagram illustrating the 3D video format using a two-dimensional image and a Depth image according to the related art.
[Fig. 6] Fig. 6 is a diagram illustrating an example of a 3D video format according to the present invention.
[Fig. 7] Fig. 7 is a diagram illustrating another 3D video format according to the present invention.
[Fig. 8] Fig. 8 is a block diagram illustrating a configuration of a reproducing apparatus configured in accordance with the 3D format according to the present invention shown in Fig. 7, that is, a reproducing apparatus to which the present invention is applied.
[Fig. 9] Fig. 9 is a flowchart illustrating a reproducing process of the reproducing apparatus shown in Fig. 8.
[Fig. 10] Fig. 10 is a diagram illustrating another 3D video format according to the present invention.
[Fig. 11] Fig. 11 is a block diagram illustrating a configuration of another reproducing apparatus configured in accordance with the 3D format according to the present invention shown in Fig. 10, that is, a reproducing apparatus to which the present invention is applied.
[Fig. 12] Fig. 12 is a flowchart illustrating an example of a reproducing process performed by the reproducing apparatus shown in Fig. 11.
[Fig. 13] Fig. 13 is a block diagram illustrating a configuration of a further reproducing apparatus configured in accordance with the 3D format according to the present invention shown in Fig. 10, that is, a reproducing apparatus to which the present invention is applied.
[Fig. 14] Fig. 14 is a flowchart illustrating a reproducing process performed by the reproducing apparatus shown in Fig. 13.
[Fig. 15] Fig. 15 is a diagram illustrating an angle θ serving as an example of metadata of the 3D video format according to the present invention.
[Fig. 16] Fig. 16 is a diagram illustrating a portion in a media to which the angle θ shown in Fig. 15 is stored.
[Fig. 17] Fig. 17 is a diagram illustrating another portion in a media to which the angle θ shown in Fig. 15 is stored.
[Fig. 18] Fig. 18 is a diagram illustrating usage of the angle θ shown in Fig. 15.
[Fig. 19] Fig. 19 is a block diagram illustrating a configuration of a computer serving as a reproducing apparatus to which the present invention is applied.

### Description of Embodiments

First, a conventional 3D video format will be described in order to facilitate understanding of the present invention.

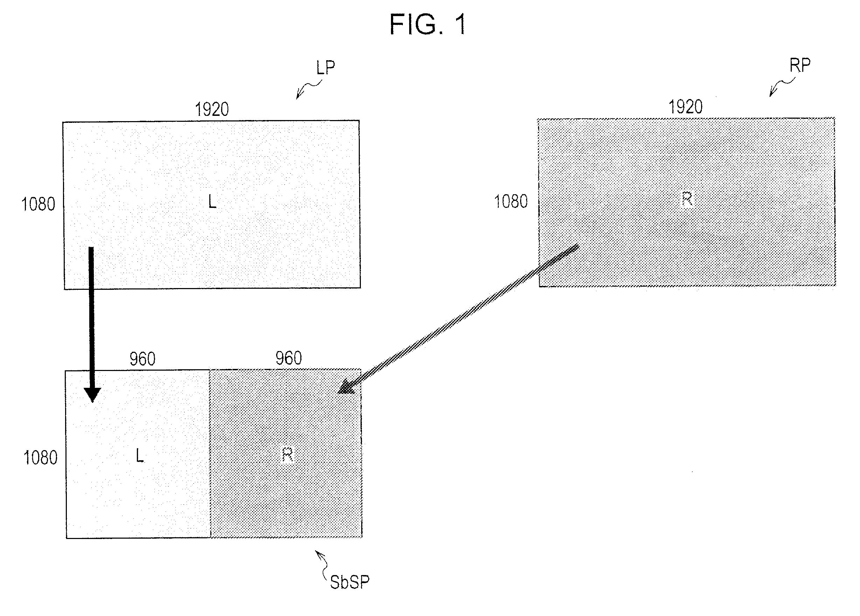

In a 3D video format using an L image and an R image, as shown in Fig. 1, for example, an image obtained by reducing the number of pixels of the L image LP in a horizontal direction to half and an image obtained by reducing the number of pixels of the R image RP in the horizontal direction to half are arranged in the horizontal direction so that a single image SbSP is obtained, and a video signal of the image SbSP is used. Note that the image SbSP is referred to as a side-by-side image SbSP hereinafter.

A 3D display apparatus employing the LR image display method (polarized filter method, a liquid crystal shutter method, or the like) displays the L image LP and the R image RP by performing the signal processing on a video signal of the side-by-side image SbSP.

In this case, when a user wearing special glasses watches the 3D display apparatus, the right eye sees the L image LP and the left eye sees the R image RP. As a result, the use sees a 3D image.

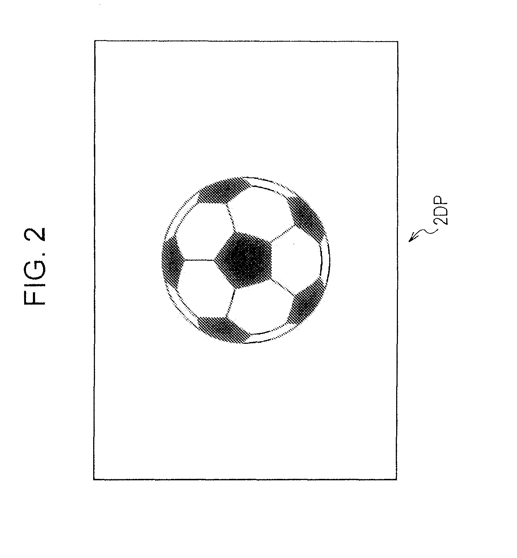

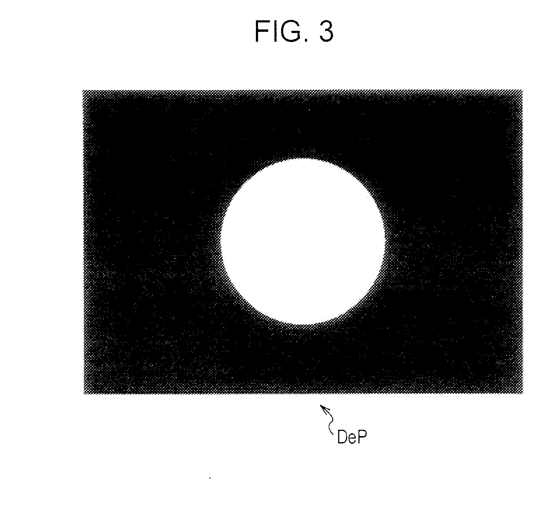

On the other hand, in a 3D video format using a two-dimensional image and a Depth image, a video signal of a two-dimensional image 2DP as shown in Fig. 2 and a video signal of a Depth image DeP as shown in Fig. 3 are used.

The two-dimensional image 2DP may be displayed in a general display apparatus as well as a 3D display apparatus.

The Depth image DeP is an image in which information on depth of the two-dimensional image 2DP is represented by a grayscale. The Depth image DeP has a characteristic in which as a region has a lighter gray scale, the region is seen to be located in a front side in a 3D display apparatus. For example, in examples of Figs. 2 and 3, a soccer ball is seen to be located in a front side. Note that an encoding method for the Depth image DeP is standardized by MPEG-C (ISO/IEC 23002).

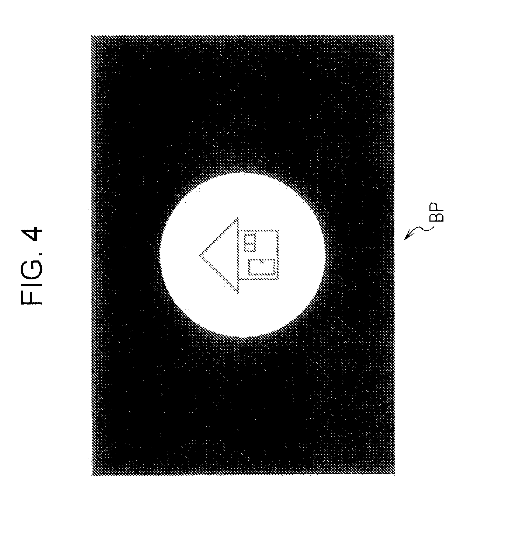

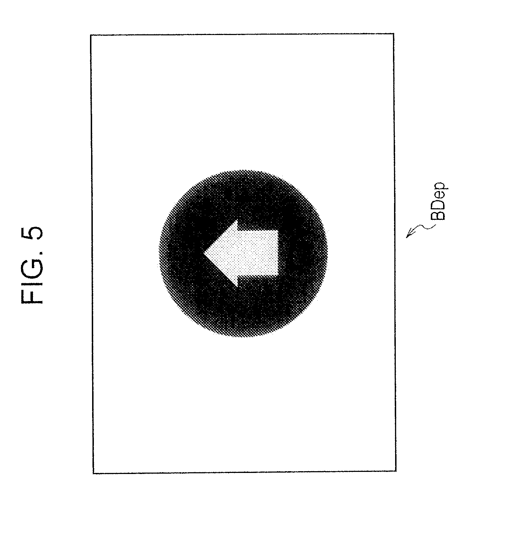

Furthermore, in the 3D video format of the lenticular method according to Non Patent Literature 1, in addition to video signals of a two-dimensional image 2DP and a Depth image DeP, video signals of an "image BP which is hidden behind an object" shown in Fig. 4 and a "Depth image BDep of the image BP" shown in Fig. 5 are used.

The "image BP which is hidden behind an object" is a two-dimensional image required for rendering a background image (a house in the example shown in Fig. 4) of an object (an image included in the two-dimensional image 2DP, that is, the soccer ball in the examples shown in Figs. 2 and 4) viewed from a certain viewpoint when an image viewed from three or more viewpoints (Multi-views) is to be generated on the basis of the two-dimensional image 2DP and the Depth image DeP.

The "Depth image BDep of the image BP" is an image which represents information on a depth of the "image BP which is hidden behind an object" by grayscale.

The 3D display apparatus employing the lenticular method generates an image viewed from three or more viewpoints (Multi-views) on the basis of the two-dimensional image 2DP and the Depth image DeP and displays the image. The 3D display apparatus employing the lenticular method uses the "image BP which is hidden behind an object" and the "Depth image BDep of the image BP" when generating the image viewed from three or more viewpoints (Multi-views).

The 3D display apparatus employing the lenticular method is capable of allowing the user to view a three-dimensional image without wearing glasses. That is, a surface of the 3D display apparatus is constituted by a substantially U-shaped lens. Accordingly, an image viewed by the right eye and an image viewed by the left eye are changed depending on a position of the eyes of the user who views the surface of the 3D display apparatus. Consequently, the user may view and recognize different images obtained from different three or more viewpoints.

The conventional 3D video formats have been described hereinabove with reference to Figs. 1 to 5.

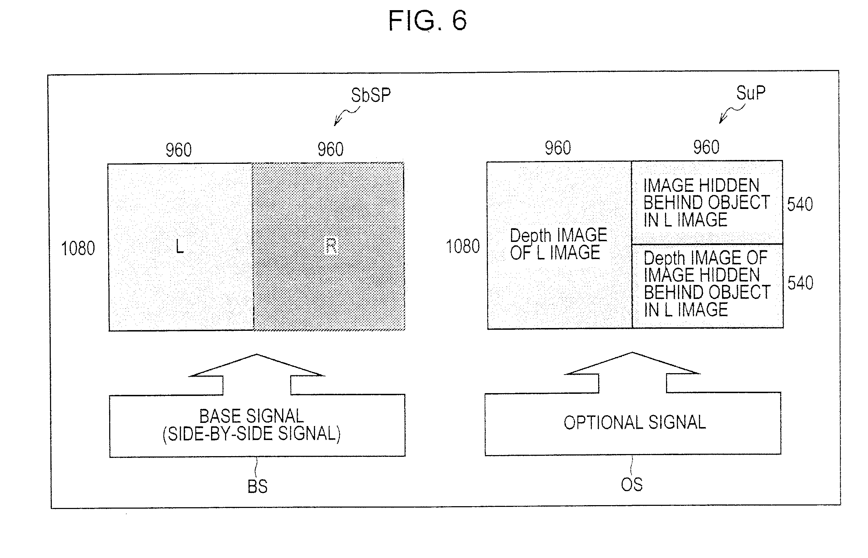

Next, referring to Fig. 6, an example of a 3D video format to which the present invention is applied (hereinafter referred to as a "3D video format according to the present invention") will be described.

In an example of the 3D video format according to the present invention shown in Fig. 6, in addition to the video signal of the side-by-side image SbSP, a video signal of an image Sup (hereinafter referred to as a "sub-image SuP") obtained by collecting the following three images regarding the L image LP of the side-by-side image SbSP are used; the Depth image of the L image, an image which is hidden behind an object included in the L image, and a Depth image of the image hidden behind the object. In this case, a method for arranging the images is not limited. In the example shown in Fig. 6, an image hidden behind an object included in the L image obtained by reducing the number of pixels thereof in a horizontal direction to half and the number of pixels thereof in a vertical direction to half and a Depth image of the image are vertically arranged in this order from above, and a Depth image of the L image obtained by reducing the number of pixels thereof in the horizontal direction to half is arranged on the left side of these images whereby the sub-image SuP is configured.

Note that a video signal required for 3D display performed by the 3D display apparatus employing the LR image display method (a polarized filter method, a liquid crystal shutter method, or the like) is referred to as a "base signal BS" hereinafter. Another video signal, that is, a video signal required in a case where the 3D display apparatus using an image viewed from three or more viewpoints (Multi-views) (lenticular method) is referred to as an "optional signal OS".

Specifically, in the example shown in Fig. 6, a video signal of the side-by-side image SbSP serves as the base signal BS. A video signal of the sub-image SuP serves as the optional signal OS.

Accordingly, using these signal names, the 3D video format according to the present invention uses the base signal BS and the optional signal OS.

In this case, the 3D display apparatus employing the LR image display method (the polarized filter method, the liquid crystal shutter method, or the like) may display the L image LP and the R image RP by performing signal processing on the base signal BS. Therefore, when user wearing special glasses views the 3D display apparatus, the right eye views the L image LP and the left eye views the R image RP, and accordingly, the user recognizes a 3D image.

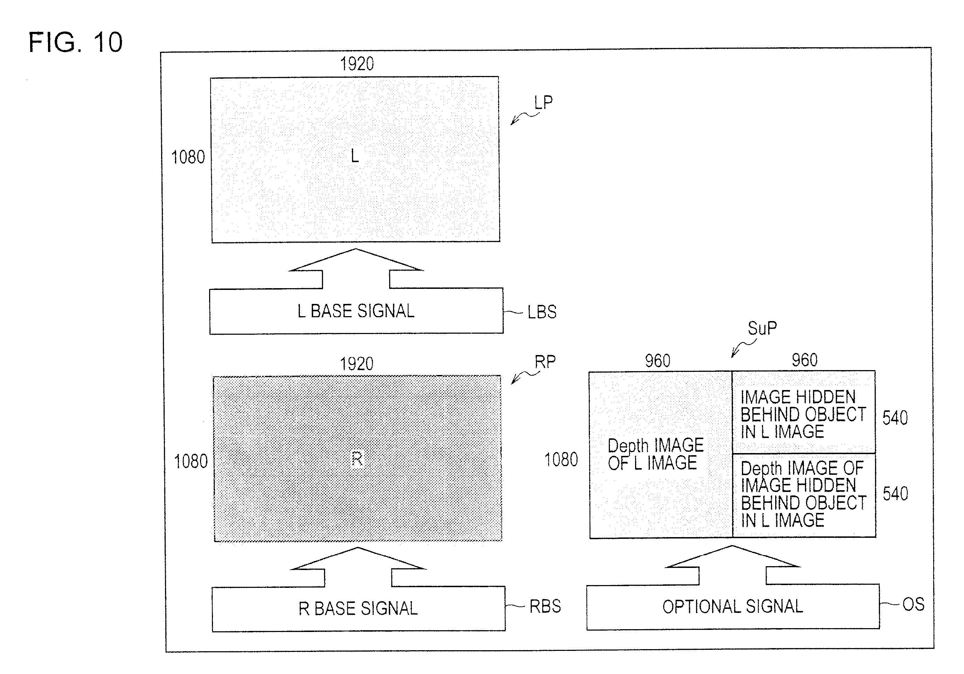

In other words, the base signal BS is not limited to the example shown in Fig. 6 as long as a format which is capable of individually displaying the L image LP and the R image RP in the 3D display apparatus employing the LR image display method (the polarized filter method, the liquid crystal shutter method, or the like) is employed. Note that another example of the base signal BS will be described hereinafter with reference to Fig. 10.

Furthermore, the 3D display apparatus employing the lenticular method generates an image viewed from three or more viewpoints (Multi-views) using the L image LP of the base signal BS as the two-dimensional image 2DP and the Depth image of the L image of the optional signal OS as the Depth image DeP, and displays the image. The 3D display apparatus employing the lenticular method uses the image hidden behind the object included in the L image and the Depth image of the image hidden behind the object when generating the image viewed from three or more viewpoints (Multi-views).

In other words, the optional signal OS is not limited to the example shown in Fig. 6 as long as a format for an image which can be used to generate the image viewed from three or more viewpoints (Multi-views) by the 3D display apparatus employing the lenticular method.

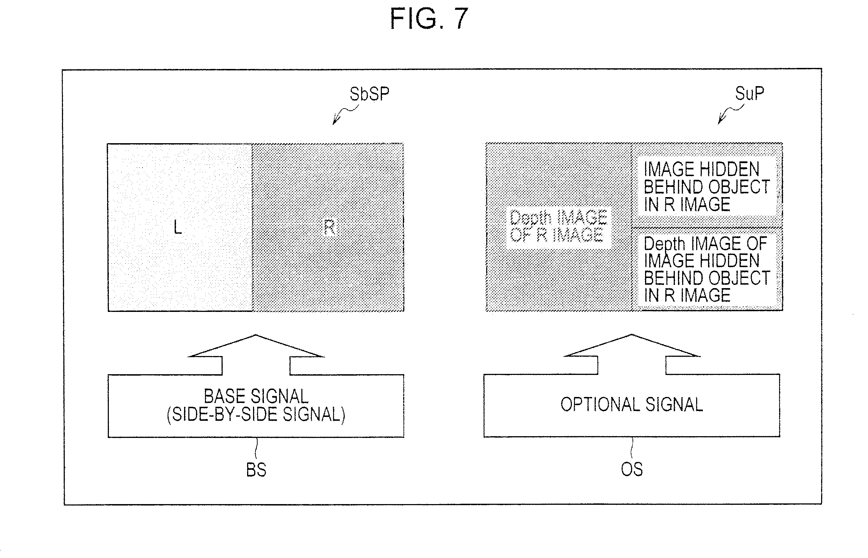

For example, the R image RP of the base signal BS may be used as the two-dimensional image 2DP. In this case, as shown in Fig. 7, an image obtained by collecting the following three images regarding the R image RP of the side-by-side image SbSP may be used as a sub-image SuP for the optional signal OS; a Depth image of the R image, an image hidden behind an object included in the R image, and a Depth image of the image hidden behind the object of the R image. In this case, a method for arranging the images is not limited. In the example shown in Fig. 7, referring also to the example shown in Fig. 6, an image hidden behind an object included in the R image obtained by reducing the number of pixels thereof in a horizontal direction to half and the number of pixels thereof in a vertical direction to half and a Depth image of the image are vertically arranged in this order from above, and a Depth image of the R image obtained by reducing the number of pixels of the R images in the horizontal direction to half is arranged on the left side of these images whereby a sub-image SuP is configured.

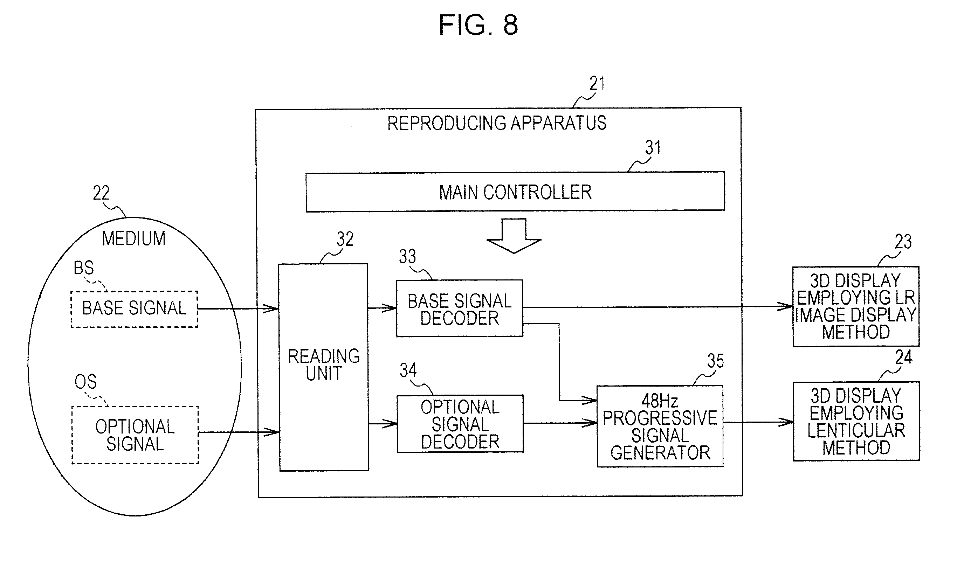

Fig. 8 is a diagram illustrating a reproducing apparatus configured in accordance with the 3D format of examples shown in Figs. 6 and 7 according to the present invention. That is, a reproducing apparatus 21 shown in Fig. 8 is an embodiment of a reproducing apparatus to which the present invention is applied.

The reproducing apparatus 21 of the example shown in Fig. 8 includes a main controller 31, a reading unit 32, a base-signal decoder 33, an optional-signal decoder 34, and a 48-Hz progressive signal generator 35.

A medium 22 records a stream obtained by decoding two video signals (the base signal BS and the optional signal OS) of the 3D video format according to the present invention. It is assumed that the video signals are recorded in accordance with 24-Hz progressive.

Furthermore, a 3D display apparatus 23 employing the LR image display method (the polarized filter method, the liquid crystal shutter method, or the like) and a 3D display apparatus 24 employing the lenticular method are connectable to the reproducing apparatus 21.

The main controller 31 controls entire operation of the reproducing apparatus 21. That is, the main controller 31 controls operations of various blocks including the reading unit 32, the base-signal decoder 33, the optional-signal decoder 34, and the 48-Hz progressive signal generator 35. Note that arrows representing connections from the main controller 31 to the various blocks are not shown to improve visualization of the drawing, and a white arrow is shown instead. The meaning of the white arrow is the same in the other drawings.

The reading unit 32 reads the base signal BS from the medium 22 and supplies the base signal BS to the base-signal decoder 33. Furthermore, the reading unit 32 reads the optional signal OS from the medium 22 and supplied the optional signal OS to the optional-signal decoder 34.

Note that the base signal BS and the optional signal OS may be recorded in the medium 22 as different streams or may be recorded in the medium 22 as a single multiplexed stream. In the latter case, the reading unit 32 reads the multiplexed stream from the medium 22, divides the multiplexed stream into the base signal BS and the optional signal OS, and supplies the signals to the respective signal processors in the next stage.

The base-signal decoder 33 decodes the encoded base signal BS so as to obtain a 24-Hz progressive base signal BS. Thereafter, the base-signal decoder 33 supplies the 24-Hz progressive base signal BS to the 3D display apparatus 23 employing the LR image display method and the 48-Hz progressive signal generator 35.

The 3D display apparatus 23 employing the LR image display method performs signal processing on the 24-Hz progressive base signal BS so as to display the L image LP and the R image RP.

The optional-signal decoder 34 decodes the encoded optional signal OS so as to obtain a 24-Hz progressive optional signal OS. Thereafter, the optional-signal decoder 34 supplies the 24-Hz progressive optional signal OS to the 48-Hz progressive signal generator 35.

The 48-Hz progressive signal generator 35 alternately arranges the 24-Hz progressive base signal BS and the 24-Hz progressive optional signal OS on a frame-by-frame basis so as to generate a 48-Hz progressive signal to be supplied to the 3D display apparatus 24 employing the lenticular method.

The 3D display apparatus 24 employing the lenticular method uses an L image LP in an image corresponding to the 48-Hz progressive signal output from the 48-Hz progressive signal generator 35 as the two-dimensional image 2DP and uses a Depth image of the L image as the Depth image DeP so as to generate an image viewed from three or more viewpoints (Multi-views) and displays the image. The 3D display apparatus 24 employing the lenticular method uses an image hidden behind an object included in the L image in the image corresponding to the 48-Hz progressive signal output from the 48-Hz progressive signal generator 35 and uses a Depth signal of the image when generating an image viewed from three or more viewpoints (Multi-views).

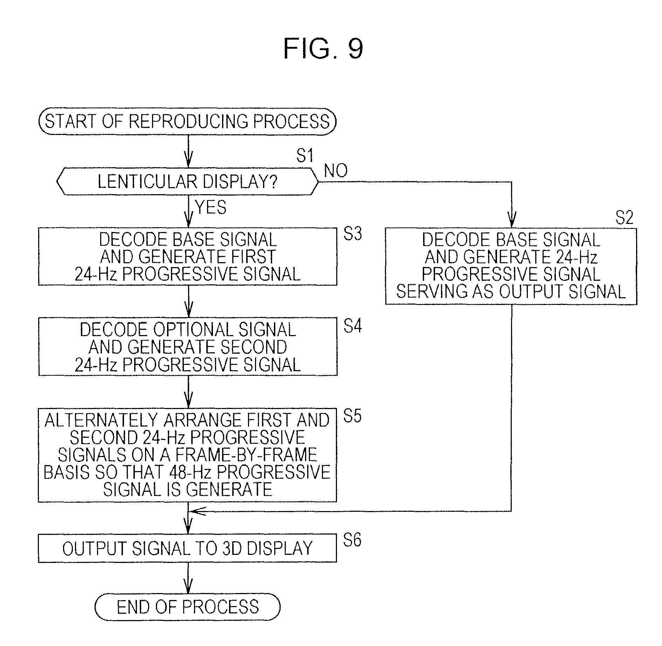

Fig. 9 is a flowchart illustrating a process performed by the reproducing apparatus 21 shown in Fig. 8 (hereinafter referred to as a "reproducing process").

In step S1, the main controller 31 of the reproducing apparatus 21 determines whether an output destination corresponds to the 3D display apparatus 24 employing the lenticular method.

When the output destination corresponds to the 3D display apparatus 23 employing the LR image display method, the determination is negative in step S1. Then, the reading unit 32 reads the base signal BS from the medium 22 and supplies the base signal BS to the base-signal decoder 33. Thereafter, the process proceeds to step S2.

In step S2, the base-signal decoder 33 decodes the decoded base signal BS so as to generate a 24-Hz progressive signal (base signal BS). In step S6, the base-signal decoder 33 outputs the signal to the 3D display apparatus 23 employing the LR image display method. By this, the reproducing process is terminated.

On the other hand, when the output destination corresponds to the 3D display apparatus 24 employing the lenticular method, the determination is affirmative in step S1. Then, the reading unit 32 reads the base signal BS from the medium 22 and supplies the base signal BS to the base-signal decoder 33. Furthermore, the reading unit 32 reads the optional signal OS from the medium 22 and supplies the optional signal OS to the optional-signal decoder 34. Thereafter, the process proceeds to step S3.

In step S3, the base-signal decoder 33 decodes the encoded base signal BS so as to generate a first 24-Hz progressive signal (base signal BS). The first 24-Hz progressive signal (base signal BS) is supplied to the 48-Hz progressive signal generator 35.

In step S4, the optional-signal decoder 34 decodes the encoded optional signal OS so as to generate a second 24-Hz progressive signal (optional signal OS). The 24-Hz progressive signal (optional signal OS) is supplied to the 48-Hz progressive signal generator 35.

Note that a processing order of step S3 and step S4 is not particularly limited to the order shown in Fig. 9. Specifically, the process in step S4 may be performed before the process in step S3 is performed or the process in step S3 and the process in step S4 may be substantially simultaneously performed. Either way, after the process in step S3 and the process in step S4 are terminated, the process proceeds to step S5.

In step S5, the 48-Hz progressive signal generator 35 alternately arranges the first 24-Hz progressive signal (base signal BS) and the second 24-Hz progressive signal (optional signal OS) on a frame-by-frame basis so as to generate a 48-Hz progressive signal serving as an output signal.

In step S6, the 48-Hz progressive signal generator 35 outputs the signal to the 3D display apparatus 24 employing the lenticular method. By this, the reproducing process is terminated.

The examples shown in Figs. 6 and 7 have been described hereinabove as the 3D format according to the present invention. Thereafter, the embodiment of the reproducing apparatus configured in accordance with the 3D format according to the present invention shown in Figs. 6 and 7 has been described hereinabove.

Note that the present invention is not particularly limited to the embodiment and various embodiments may be employed.

For example, Fig. 10 is a diagram illustrating an example of a 3D video format according to the present invention which is different from the examples shown in Figs. 6 and 7.

In the example of the 3D video format according to the present invention shown in Fig. 10, instead of the side-by-side image SbSP, the original L image LP and the original R image RP are used. Specifically, the video signals of the L image LP and the R image RP are used as base signals. Hereinafter, the base signal of the former image, that is, the video signal of the L image LP is referred to as an "L base signal LBS". Furthermore, the base signal of the latter signal, that is, the video signal of the R image RP is referred to as an "R base signal RBS".

Specifically, in the example of the 3D video format according to the present invention shown in Fig. 10, a base signal BS and an optional signal OS are used.

In the example shown in Fig. 10, a video signal of a sub-image SuP having a format the same as that shown in Fig. 6 is used as the optional signal OS. Note that the optional signal OS is not limited to the example shown in Fig. 6, and for example, a video signal of a sub-image SuP having a format the same as that shown in Fig. 7 may be used.

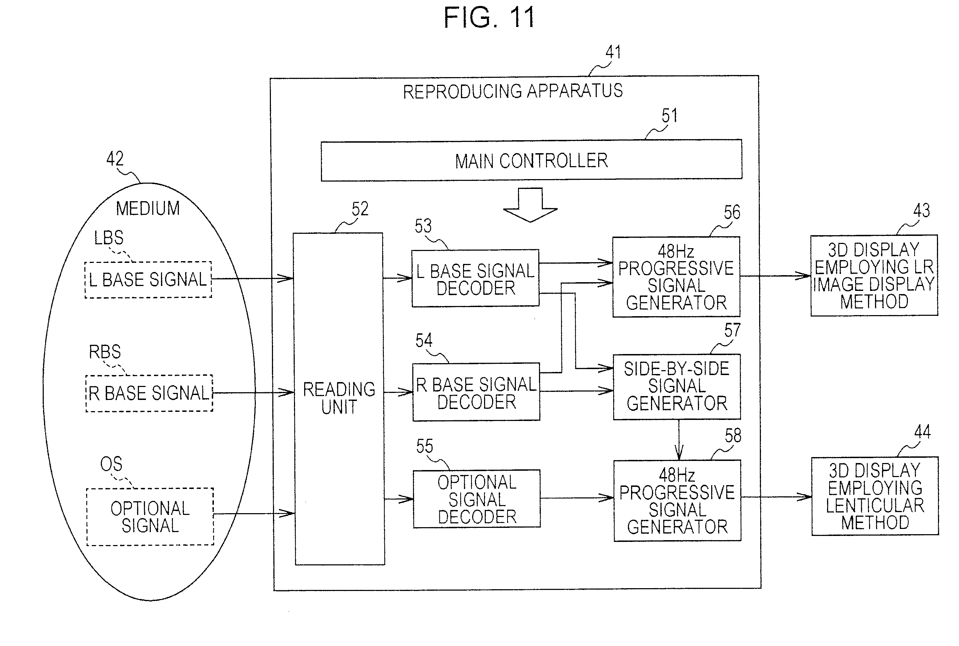

Fig. 11 is a block diagram illustrating a configuration of another reproducing apparatus configured in accordance with the 3D format according to the present invention shown in Fig. 10. That is, a reproducing apparatus 41 is an embodiment of a reproducing apparatus which is different from the reproducing apparatus 21.

The reproducing apparatus 41 shown in Fig. 11 includes a main controller 51, a reading unit 52, an L-base-signal decoder 53, an R-base-signal decoder 54, an optional-signal decoder 55, a 48-Hz progressive signal generator 56, a side-by-side signal generator 57, and a 48-Hz progressive signal generator 58.

A medium 42 records a stream obtained by encoding three video signals of the 3D video format according to the present invention (i.e., an L base signal LBS, an R base signal RBS, and an optional signal OS). The video signals are recorded in accordance with 24-Hz progressive.

Furthermore, a 3D display apparatus 43 employing the LR image display method (the polarized filter method, the liquid crystal shutter method, or the like) and a 3D display apparatus 44 employing the lenticular method are connectable to the reproducing apparatus 41.

The main controller 51 controls entire operation of the reproducing apparatus 41. Specifically, the main controller 51 controls operations of the various blocks including the reading unit 52, the L-base-signal decoder 53, the R-base-signal decoder 54, the optional-signal decoder 55, the 48-Hz progressive signal generator 56, the side-by-side signal generator 57, and the 48-Hz progressive signal generator 58.

The reading unit 52 reads the L base signal LBS from the medium 42 and supplies the L base signal LBS to the L-base-signal decoder 53. The reading unit 52 reads the R base signal RBS from the medium 42 and supplies the R base signal RBS to the R-base-signal decoder 54. Furthermore, the reading unit 52 reads the optional signal OS from the medium 42 and supplies the optional signal OS to the optional-signal decoder 55. Note that the L base signal LBS, the R base signal RBS, and the optional signal OS may be recorded in the medium as different streams or may be recorded in the medium as a single multiplexed stream. In the latter case, the reading unit 32 reads a singles multiplexed stream from the medium, divides the multiplexed stream into the L base signal LBS, the R base signal RBS, and the optional signal OS, and supplies the signals to the signal processing units in the next stage.

The L-base-signal decoder 53 decodes the encoded L base signal LBS so as to obtain a 24-Hz progressive L base signal LBS and supplies the 24-Hz progressive L base signal LBS to the 48-Hz progressive signal generator 56 and the side-by-side signal generator 57.

The R-base-signal decoder 54 decodes the encoded R base signal RBS so as to obtain a 24-Hz progressive R base signal RBS and supplies the 24-Hz progressive R base signal RBS to the 48-Hz progressive signal generator 56 and the side-by-side signal generator 57.

The 48-Hz progressive signal generator 56 alternately arranges the 24-Hz progressive L base signal LBS and the 24-Hz progressive R base signal RBS on a frame-by-frame basis so as to generate a 48-Hz progressive signal and supplies the 48-Hz progressive signal to the 3D display apparatus 43 employing the LR image display method.

The 3D display apparatus 43 employing the LR image display method performs signal processing on the 48-Hz progressive signal so as to display the L image LP and the R image RP.

The optional-signal decoder 55 decodes the encoded optional signal OS so as to obtain a 24-Hz progressive optional signal OS and supplies the 24-Hz progressive optional signal OS to the 48-Hz progressive signal generator 58.

The side-by-side signal generator 57 generates a video signal of a side-by-side image SbSP (hereinafter referred to as a "side-by-side signal") using the 24-Hz progressive L base signal LBS and the 24-Hz progressive R base signal RBS and supplies the side-by-side signal to the 48-Hz progressive signal generator 58. Specifically, the side-by-side signal has a format the same as that of the 24-Hz progressive base signal BS output from the base-signal decoder 33 shown in Fig. 8.

The 48-Hz progressive signal generator 58 alternately arranges the 24-Hz progressive side-by-side signal and the 24-Hz progressive optional signal OS on a frame-by-frame basis so as to generate a 48-Hz progressive signal and supplies the 48-Hz progressive signal to the 3D display apparatus 44 employing the lenticular method.

The 3D display apparatus 44 employing the lenticular method uses the L image LP among images corresponding to the 48-Hz progressive signal output from the 48-Hz progressive signal generator 58 as the two-dimensional image 2DP and uses a Depth image of the L image as the Depth image DeP so as to generate an image viewed from three or more viewpoints (Multi-views). Then, the 3D display apparatus 44 employing the lenticular method displays the image. The 3D display apparatus 44 employing the lenticular method uses an image hidden behind an object included in an L image and a Depth image of the image hidden behind the object among the images corresponding to the 48-Hz progressive signal output from the 48-Hz progressive signal generator 58 when generating the image viewed from three or more viewpoints (Multi-views).

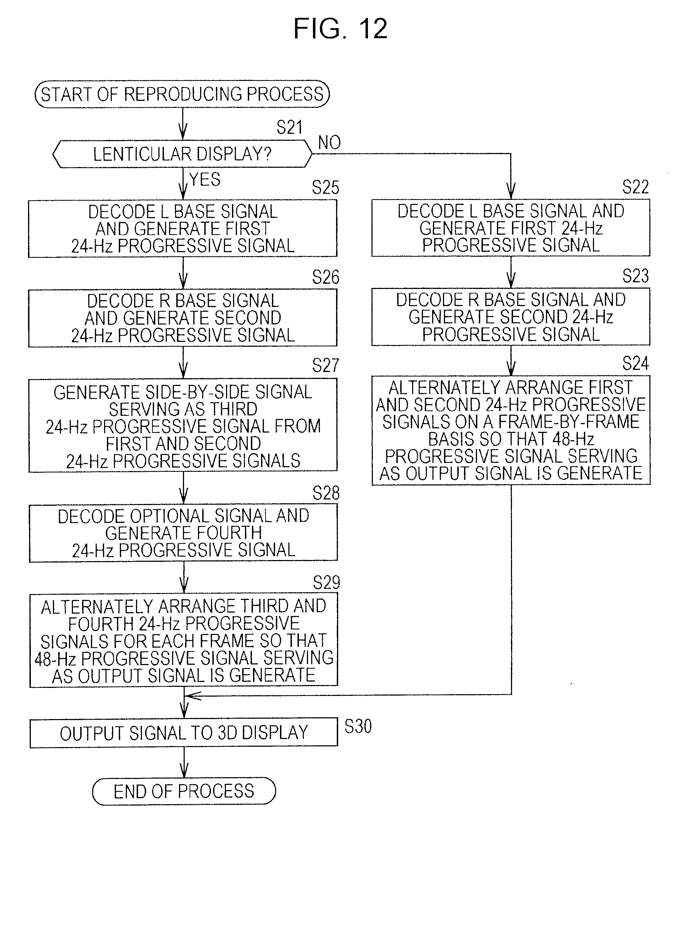

Fig. 12 is a flowchart illustrating an example of a reproducing process performed by the reproducing apparatus 41 shown in Fig. 11.

In step S21, the main controller 51 of the reproducing apparatus 41 determines whether an output destination corresponds to the 3D display apparatus 44 employing the lenticular method.

When the output destination corresponds to the 3D display apparatus 43 employing the LR image display method, the determination is negative in step S21. Then, the reading unit 52 reads the L base signal LBS from the medium 42 and supplies the L base signal LBS to the L-base-signal decoder 53. Furthermore, the reading unit 52 reads the R base signal RBS from the medium 42 and supplies the R base signal RBS to the R-base-signal decoder 54. Thereafter, the process proceeds to step S22.

In step S22, the L-base-signal decoder 53 decodes the encoded L base signal LBS so as to generate a first 24-Hz progressive signal (L base signal LBS). The first 24-Hz progressive signal (L base signal LBS) is supplied to the 48-Hz progressive signal generator 56.

In step S23, the R-base-signal decoder 54 decodes the encoded R base signal RBS so as to generate a second 24-Hz progressive signal (R base signal RBS). The second 24-Hz progressive signal (R base signal RBS) is supplied to the 48-Hz progressive signal generator 56.

Note that the processing order of step S22 and step S23 is not particularly limited to the order shown in Fig. 12. That is, the process in step S23 may be performed before the process in step S22 is performed or the process in step S22 and the process in step S23 may be substantially simultaneously performed. Either way, after the processes in step S22 and step S23 are terminated, the process proceeds to step S24.

In step S24, the 48-Hz progressive signal generator 56 alternately arranges the first 24-Hz progressive signal (L base signal LBS) and the second 24-Hz progressive signal (R base signal RBS) on a frame-by-frame basis so as to generate a 48-Hz progressive signal serving as an output signal.

In step S30, the 48-Hz progressive signal generator 56 outputs the signal to the 3D display apparatus 43 employing the LR image display method. By this, the reproducing process is terminated.

On the other hand, when the output destination corresponds to the 3D display apparatus 44 employing the lenticular method, the determination is affirmative in step S21. Then, the reading unit 52 reads the L base signal LBS from the medium 42 and supplies the L base signal LBS to the L-base-signal decoder 53. The reading unit 52 reads the R base signal RBS from the medium 42 and supplies the R base signal RBS to the R-base-signal decoder 54. Furthermore, the reading unit 52 reads the optional signal OS from the medium 42 and supplies the optional signal OS to the optional-signal decoder 55. By this, the process proceeds to step S25.

In step S25, the L-base-signal decoder 53 decodes the encoded L base signal LBS so as to generate a first 24-Hz progressive signal (L base signal LBS). The first 24-Hz progressive signal (L base signal LBS) is supplied to the side-by-side signal generator 57.

In step S26, the R-base-signal decoder 54 decodes the encoded R base signal RBS so as to generate a second 24-Hz progressive signal (R base signal RBS). The second 24-Hz progressive signal (R base signal RBS) is supplied to the side-by-side signal generator 57.

Note that the processing order of step S25 and step S26 is not particularly limited to the order shown in Fig. 12. That is, the process in step S26 may be performed before the process in step S25 is performed, or the process in step S25 and the process in step S26 may be substantially simultaneously performed. Either way, after the processes in step S25 and step S26 are terminated, the process proceeds to step S27.

In step S27, the side-by-side signal generator 57 generates a side-by-side signal regarding a third 24-Hz progressive signal using the first 24-Hz progressive signal (L base signal LBS) and the second 24-Hz progressive signal (R base signal RBS). The third 24-Hz progressive signal is supplied to the 48-Hz progressive signal generator 58.

In step S28, the optional-signal decoder 55 decodes the encoded optional signal OS so as to generate a fourth 24-Ha progressive signal (optional signal OS). The fourth 24-Ha progressive signal (optional signal OS) is supplied to the 48-Hz progressive signal generator 58.

Note that the processing order of step S27 and step S28 is not particularly limited to the order shown in Fig. 12. That is, the process in step S28 may be performed before the process in step S27 is performed, or the process in step S27 and the process in step S28 may be substantially simultaneously performed. Either way, after the processes in step S27 and step S28 are terminated, the process proceeds to step S29.

In step S29, the 48-Hz progressive signal generator 58 alternately arranges the third 24-Hz progressive signal (side-by-side signal) and the fourth 24-Ha progressive signal (optional signal OS) on a frame-by-frame basis so as to generate a 48-Hz progressive signal serving as an output signal.

In step S30, the 48-Hz progressive signal generator 58 outputs the signal to the 3D display apparatus 44 employing the lenticular method. By this, the reproducing process is terminated.

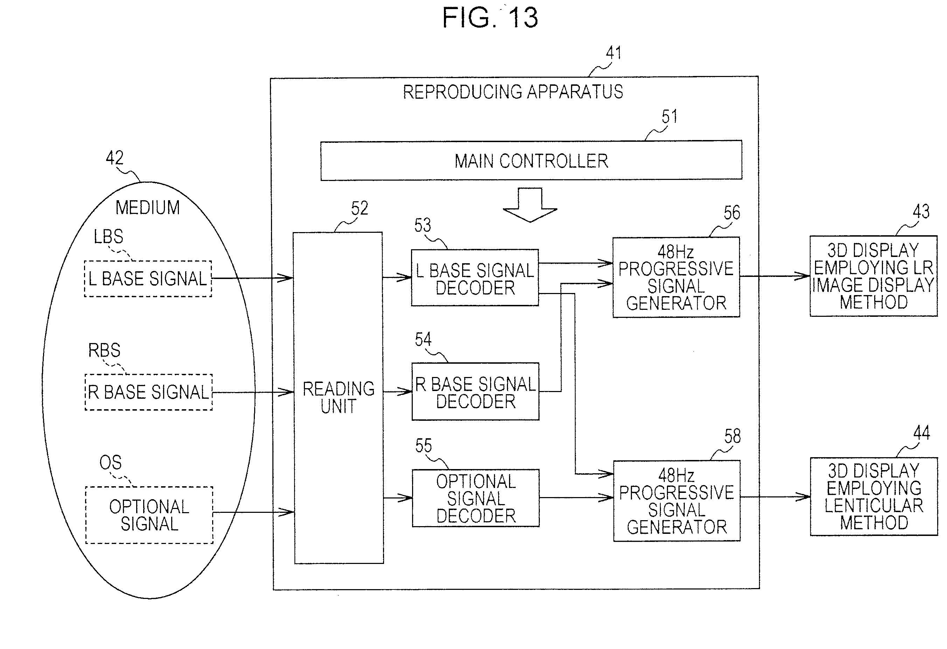

In the examples shown in Figs. 12 and 13, it is assumed that a type of the 3D display apparatus 44 employing the lenticular method is the same as a type of the 3D display apparatus 24 employing the lenticular method of the example shown in Fig. 8. Therefore, the side-by-side signal is generated in the reproducing apparatus 41 using the L base signal LBS and the R base signal RBS so that a type of the signal to be supplied to the 3D display apparatus 44 employing the lenticular method becomes the same as that of the signal supplied to the 3D display apparatus 24 employing the lenticular method.

However, the two-dimensional image 2DP required for generating an image viewed from three or more viewpoints (Multi-views) does not corresponds to the side-by-side image SbSP but the L image LP or the R image RP. For example, when the sub-image SuP in the example shown in Fig. 10 is employed, the L image LP is used as the two-dimensional image 2DP.

Therefore, when the 3D display apparatus 44 employing the lenticular method has a function of processing the 48-Hz progressive signal generated by alternately arranging the L base signal LBS or the R base signal RBS and the optional signal OS on a frame-by-frame basis, the reproducing apparatus is not required to generate a side-by-side signal.

In this case, for example, the reproducing apparatus 41 shown in Fig. 13 may be configured. In other words, Fig. 13 shows an example of a reproducing apparatus configured in accordance with the 3D format according to the present invention shown in Fig. 10, and the configuration is different from that in the example shown in Fig. 11. That is, the reproducing apparatus 41 shown in Fig. 13 is an embodiment of a reproducing apparatus to which the present invention is applied and is different from the embodiments shown in Figs. 8 and 11.

In the reproducing apparatus 41 illustrated in Fig. 13, the side-by-side signal generator 57 included in the example of the configuration shown in Fig. 11 is omitted. Specifically, the 48-Hz progressive signal generator 58 alternately arranges the first 24-Hz progressive signal (L base signal LBS) and the 24-Hz progressive optional signal OS on a frame-by-frame basis so as to generate a 48-Hz progressive signal and supplies the 48-Hz progressive signal to the 3D display apparatus 44 employing the lenticular method. Note that other configurations of the reproducing apparatus 41 are the same as those of the example shown in Fig. 11, and therefore, descriptions thereof are omitted.

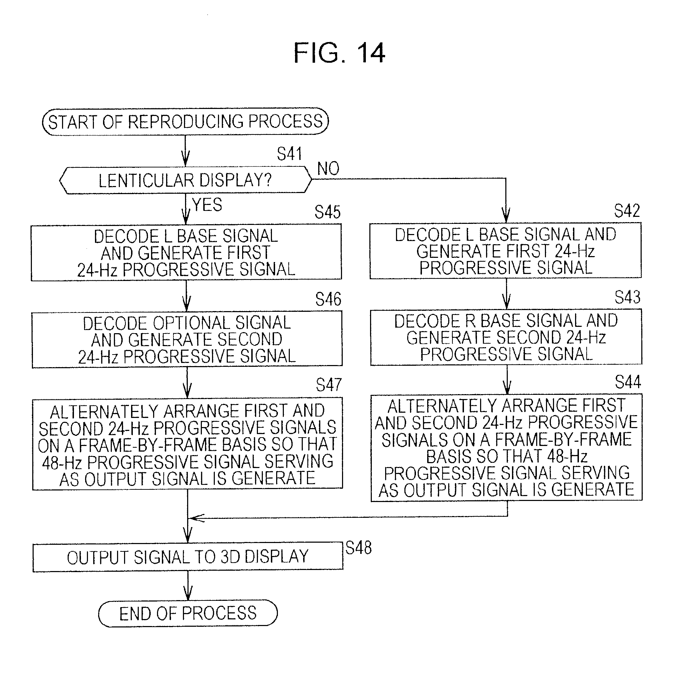

Note that an example of a reproducing process performed by the reproducing apparatus 41 in the example shown in Fig. 13 is shown in Fig. 14.

Processes in step S41 to step S44 are basically the same as the processes in step S22 to step S24 shown in Fig. 12. Specifically, a process performed in a case where the output destination corresponds to the 3D display apparatus 43 employing the LR image display method is basically the same as the process of the example shown in Fig. 12. Accordingly, a description of the process is omitted.

Specifically, the process performed in a case where the output destination corresponds to the 3D display apparatus 44 employing the lenticular method will be described hereinafter.

In this case, a determination is affirmative in step S41. Then, the reading unit 52 reads the L base signal LBS from the medium 42 and supplies the L base signal LBS to the L-base-signal decoder 53. Furthermore, the reading unit 52 reads the optional signal OS from the medium 42 and supplies the optional signal OS to the optional-signal decoder 55. Thereafter, the process proceeds to step S45.

In step S45, the L-base-signal decoder 53 decodes the encoded L base signal LBS so as to generate a first 24-Hz progressive signal (L base signal LBS). The first 24-Hz progressive signal (L base signal LBS) is supplied to the 48-Hz progressive signal generator 58.

In step S46, the optional-signal decoder 55 decodes the encoded optional signal OS so as to generate a second 24-Hz progressive signal (optional signal OS). The second 24-Hz progressive signal (optional signal OS) is supplied to the 48-Hz progressive signal generator 58.

Note that the processing order of the process in step S45 and the process in step S46 is not particularly limited to the order shown in Fig. 14. That is, the process in step S46 may be performed before the process in step S45 is performed, or the process in step S45 and the process in step S46 may be substantially simultaneously performed. Either way, after the processes in step S45 and step S46 are terminated, the process proceeds to step S47.

In step S47, the 48-Hz progressive signal generator 58 alternately arranges the first 24-Hz progressive signal (L base signal LBS) and the second 24-Hz progressive signal (optional signal OS) on a frame-by-frame basis so as to generate a 48-Hz progressive signal serving as an output signal.

In step S48, the 48-Hz progressive signal generator 58 outputs the signal to the 3D display apparatus 44 employing the lenticular method. By this, the reproducing process is terminated.

Note that when a video signal of a sub-image SuP having a format the same as that of the example shown in Fig. 7 is used as the optional signal OS instead of the sub-image SuP of the example shown in Fig. 10, the L base signal LBS described above is replaced by the R base signal RBS.

Note that in addition to the video signals of the various images described above, information items (hereinafter referred to as "metadata") regarding the various images may be defined as the 3D video format according to the present invention described above.

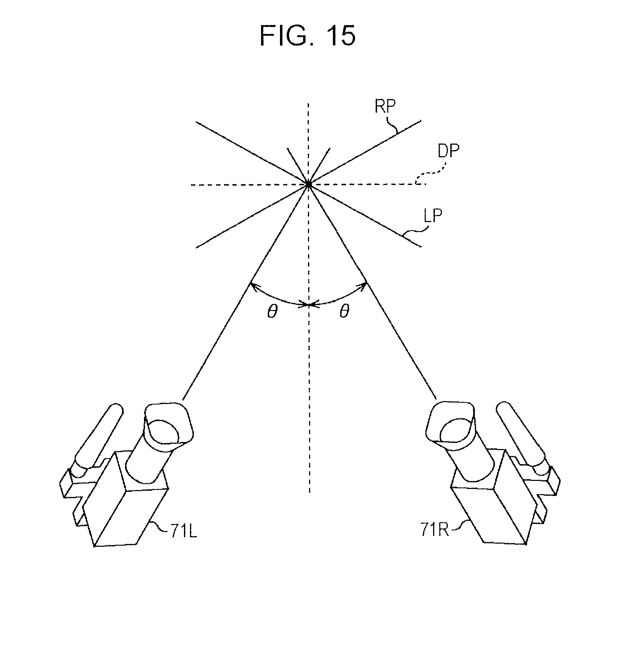

For example, as a type of metadata, as shown in Fig. 15, an angle θ defined between the right front and a viewpoint of the L image LP and between the right front and a viewpoint of the R image RP may be used. In Fig. 15, a camera 71L captures the L image LP and a camera 71R captures the R image RP.

The angle θ may be recorded in a region different from a region in which the encoded streams are recorded in the medium. Note that the "encoded streams" correspond to the base signal BS and the optional signal OS when the medium 22 shown in Fig. 8 is employed whereas the "encoded streams" correspond to the L base signal LBS, the R base signal RBS, and the optional signal OS when the medium 42 shown in Figs. 11 and 13 are employed.

For example, when the medium corresponds to a Blu-ray disc, the angle θ may be recorded in "ExtensionData" in a clip information file defined by a format of the Blu-ray disc, for example.

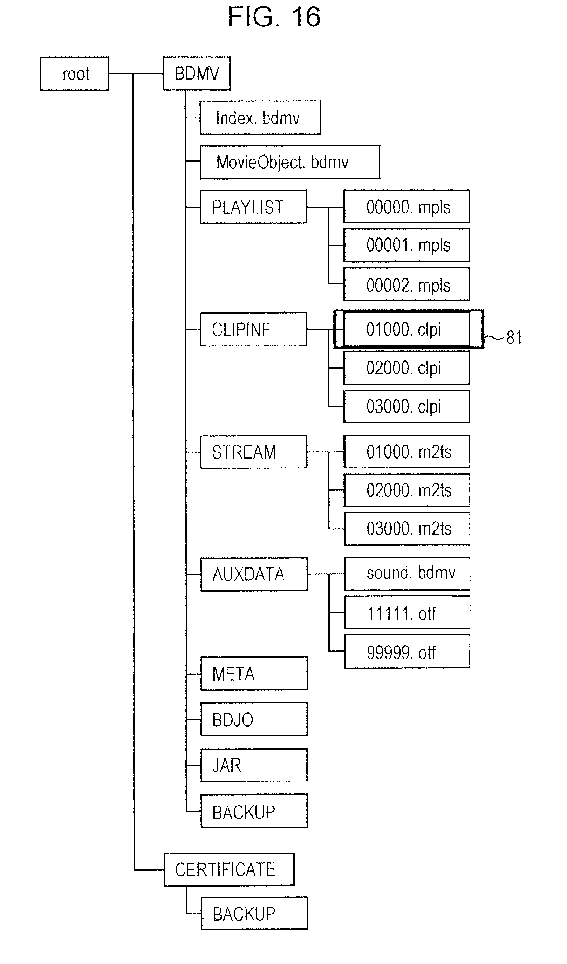

Specifically, Fig. 16 shows a management structure defined by "Blu-ray Disc Read Only Format part3", for example, and shows an example of a management structure of a file to be recorded in the Blu-ray disc. As shown in Fig. 16, the file is managed by a directory structure in a layered manner. In the medium, first, a directory (a root directory in the example shown in Fig. 16) is generated. Directories below this directory are included in a range managed by a single recording/reproducing system.

A directory "BDMV" and a directory "CERTIFICATE" are arranged below the root directory.

As one of directories immediately below the directory "BDMV", a directory "CLIPINF" including a database of a clip is arranged. Specifically, the directory "CLIPINF" includes files "zzzzz.clpi" which are clip information files serving as clip AV stream files. In the file name, a portion "zzzzz" before the period "." is constituted by a five-digit number and a portion "clpi" after the period "." is a fixed extension for this type of file.

For example, in the example shown in Fig. 16, the angles θ may be recorded in ExtensionData of the clip information file.

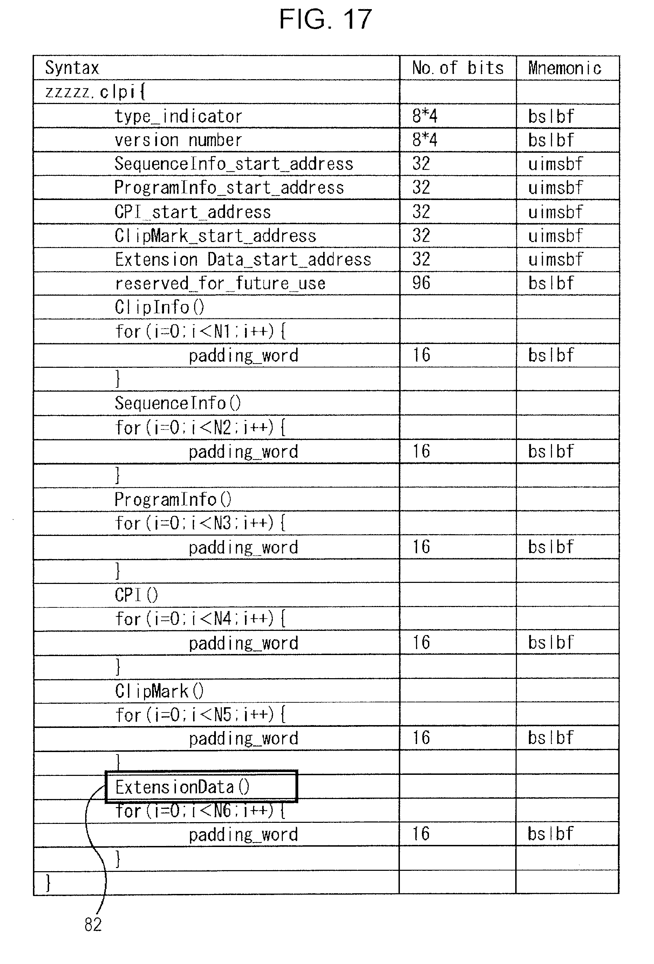

Fig. 17 shows a syntax representing a configuration example of such a clip information file 81.

A field type_indicator has a data length of 32 bits (four bytes) and represents that this file is the clip information file. A field version_number has a data length of 32 bits (four bytes) and represents a version of the clip information file.

The clip information file includes a block ClipInfo(), a block SequenceInfo(), a block ProgramInfo(), a block CPI(), a block ClipMark(), and a block ExtensionData(). A field SequenceInfo_start_address, a field ProgramInfo_start_address, a field CPI_start_address, a field ClipMark_start_address, and a field ExtensionData_start_address each of which has a data length of 32 bits represent starting addresses of the corresponding blocks.

The field "ExtensinoData_start_address" represents the start address of a block ExtensionData() 82 by the number of relative bytes from the first byte of the clip information file. The number of relative bytes starts from "0". Alternatively, when a value of the field "ExtensionData_start_address" is "0", a file "index.bdmv" does not include the block ExtensionData() 82.

The block ClipInfo() is started from a portion after a region which is reserved for future use, which has a data length of 96 bits, and which follows the field representing the starting address. In the block ClipInfo(), information on a clip AV stream which is managed by the clip information file is described. For example, the number of source packets included in a clip AV stream managed by the clip information file, information representing a type of the clip AV stream, information representing the maximum recording rate, and the like are managed in the block Cliplnfo().

In the block SequenceInfo(), information used to collectively manage sequences having consecutive STCs and ATCs (arrival time base) is described. In the block ProgramInfo(), information representing that a type of codec (such as an MPEG2 method or an MPEG4 AVC method) used to record the clip AV stream managed in the clip information file and information on an aspect ratio of video data included in the clip AV stream are described.

The block CPI() stores information on characteristic point information CPI representing a characteristic portion of the AV stream such as a random access starting point. In the block ClipMark(), an index point (jump point) used for a cue assigned to the clip such as a chapter position is described. In the block ExtensionData() 82, data according to the embodiment of the present invention, that is the angle θ are described.

Note that, when a condition of the angle θ is normalized (standardized), recording in the medium is not required.

In this case, the reproducing apparatus 21 shown in Fig. 8 and the reproducing apparatus 41 shown in Figs. 11 and 13 (hereinafter collectively referred to as a "reproducing apparatus according to the present invention") read the angle θ from the medium 22 and the medium 42 (hereinafter collectively referred to as a "medium according to the present invention") and transmit the angle θ to the 3D display apparatuses 24 and 44 employing the lenticular method (hereinafter collectively referred to as a "3D lenticular display").

Note that a method of the transmission is not particularly limited. For example, a method of a transmission through an HDMI (High-Definition Multimedia Interface) or the like may be employed. Note that, when a condition of the angle θ is normalized (standardized), the transmission is not required.

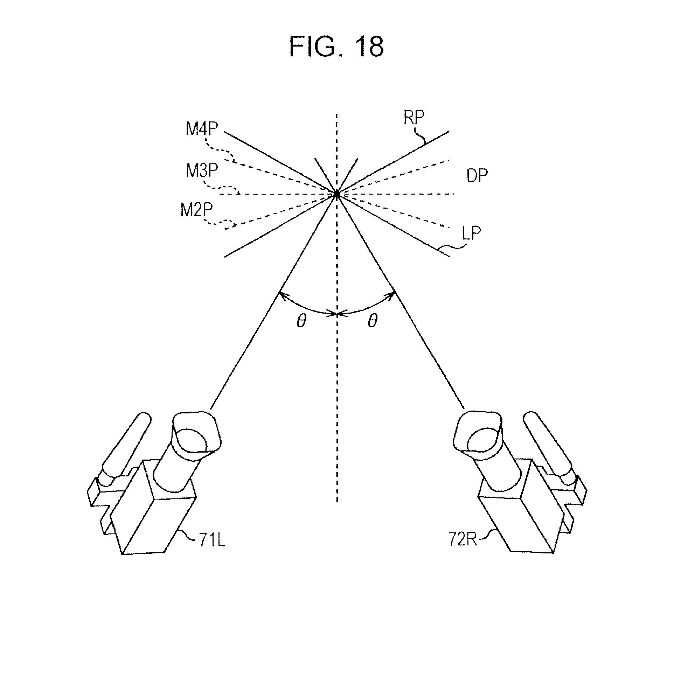

The 3D display apparatus employing the lenticular method according to the present invention generates and displays an image viewed from three or more viewpoints (Multi-views) by performing conversion (map transformation) on the L image LP using the angle θ. In this case, the Depth image of the L image, the image hidden behind the object included in the L image, and the Depth image of the image hidden behind the object are also used where appropriate. In an example shown in Fig. 18, an R image RP is generated as an image of a first viewpoint, an image M2P is generated as an image of a second viewpoint, an image M3P is generated as an image of a third viewpoint, and an image M4P is generated as an image of a fourth viewpoint.

Furthermore, not only the 3D display apparatus but also a general display apparatus may generate and display a front image DP shown in Fig. 15 by performing conversion (map transformation) on the L image LP using the angle θ. In this case, the Depth image of the L image, the image hidden behind the object included in the L image, and the Depth image of the image hidden behind the object are also used where appropriate.

Here, the series of processes described above may be executed by software as well as hardware.

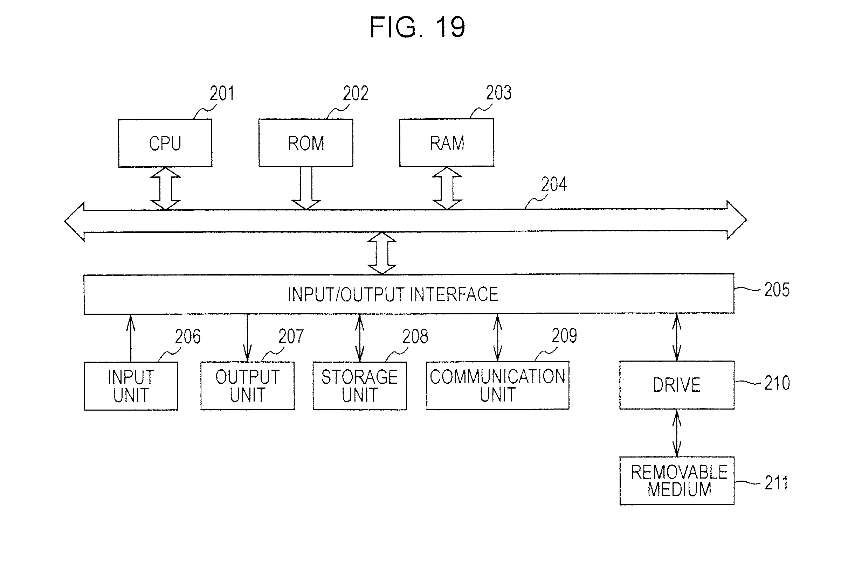

In this case, a personal computer shown in Fig. 19 may be employed as at least a portion of the information processing system described above.

In Fig. 19, a CPU (Central Processing Unit) 201 performs various processes in accordance with programs recorded in a ROM (Read Only Memory) 202 or programs loaded from a storage unit 208 to a RAM (Random Access Memory) 203. The RAM 203 appropriately stores data required for executing the various programs by the CPU 201.

The CPU 201, the ROM 202, and the RAM 203 are connected to one another through a bus 204. An input/output interface 205 is also connected to the bus 204.

An input unit 206 including a keyboard and a mouse, an output unit 207 including a display, the storage unit 208 including a hard disk, and a communication unit 209 including a modem and a terminal adapter are connected to the input/output interface 205. The communication unit 209 controls communication with another apparatus (not shown) through a network including the Internet.

Furthermore, a drive 210 to which a removable medium 211 such as a magnetic disk, an optical disc, a magneto-optical disc, or a semiconductor memory is attached where appropriate is connected to the input/output interface 205. A computer program read from the removable medium is stored in the storage unit 208 where appropriate.

When the series of processes is to be executed using software, programs included in the software are installed through the network or the recording medium in a computer incorporated in dedicated hardware or in a general personal computer capable of executing various functions by installing various programs.

Examples of the recording medium include, as shown in Fig. 19, a removable medium (package medium) 211 such as a magnetic disk (including a flexible disk), an optical disc (including a CD-ROM (Compact Disk-Read Only Memory), a DVD (Digital Versatile Disk), and a Blu-ray disc), a magneto-optical disc (including MD (Mini-Disk), or a semiconductor memory, and in addition, examples of the recording medium include the ROM 202 which records the programs or a hard disk included in the storage unit 208 which is supplied to the user in a state in which the ROM 202 or the hard disk is incorporated in the apparatus body in advance.

Note that, in this specification, steps of programs recorded in the recording medium include, in addition to processes performed in the described order in a time series, processes performed in parallel and processes individually performed.

Furthermore, in this specification, the system represents the entire apparatus including a plurality of processing apparatuses and processors.

Note that, the present invention is applicable to a reproducing apparatus which distinguishes a display method, which converts a video signal into a video signal suitable for the display method, and which outputs the converted video signal, and the reproducing apparatus also includes a display apparatus which is not compatible with the 3D display.

### Reference Signs List

- 21: REPRODUCING APPARATUS
- 22: MEDIUM
- 23: 3D DISPLAY EMPLOYING AN LR IMAGE DISPLAY METHOD
- 24: 3D DISPLAY EMPLOYING A LENTICULAR METHOD
- 31: MAIN CONTROLLER
- 32: READING UNIT
- 33: BASE-SIGNAL DECODER
- 34: OPTIONAL-SIGNAL DECODER
- 35: 48-HZ PROGRESSIVE SIGNAL GENERATOR
- 41: REPRODUCING APPARATUS
- 42: MEDIUM
- 43: 3D DISPLAY EMPLOYING AN LR IMAGE DISPLAY METHOD
- 44: 3D DISPLAY EMPLOYING A LENTICULAR METHOD
- 51: MAIN CONTROLLER
- 52: READING UNIT
- 53: L-BASE-SIGNAL DECODER
- 54: R-BASE-SIGNAL DECODER
- 55: OPTIONAL-SIGNAL DECODER
- 56: 48-HZ PROGRESSIVE SIGNAL GENERATOR
- 57: SIDE-BY-SIDE SIGNAL GENERATOR
- 58: 48-HZ PROGRESSIVE SIGNAL GENERATOR
- 201: CPU
- 202: ROM
- 203: RAM
- 208: STORAGE UNIT
- 211: REMOVABLE MEDIUM

## Claims

1. A data structure comprising:
a first data structure which is used in a first 3D (three dimensional) video-image display method in which an L image for a left eye and an R image for a right eye are used and which includes image data corresponding to the L image and image data corresponding to the R image used for display; and
a second data structure which is used in a second 3D video-image display method in which an image viewed from three or more viewpoints is generated using at least a two-dimensional image and a Depth image and which includes at least image data corresponding to the Depth image when the L image or the R image of the first data structure is employed as the two-dimensional image.

2. The data structure according to Claim 1,
wherein the second data structure includes an image hidden behind an object included in the two-dimensional image and a Depth image of the image hidden behind the object.

3. A reproducing apparatus, wherein
when image data having a data structure including
a first data structure which is used in a first 3D (three dimensional) video-image display method in which an L image for a left eye and an R image for a right eye are used and which includes image data corresponding to the L image and image data corresponding to the R image used for display, and
a second data structure which is used in a second 3D video-image display method in which an image viewed from three or more viewpoints is generated using at least a two-dimensional image and a Depth image and which includes at least image data corresponding to the Depth image when the L image or the R image of the first data structure is employed as the two-dimensional image,
is to be reproduced,
the image data corresponding to the L image and the image data corresponding to the R image obtained from among image data of the first data structure are reproduced in a case where a display unit employing the first video-image display method is used, and
the image data corresponding to the L image or the R image of the first data structure is reproduced and the Depth image of the second data structure is reproduced in a case where a display unit employing the second video-image display method is used.

4. The reproducing apparatus according to Claim 4,
wherein the second data structure further includes an image hidden behind an object included in the two-dimensional image and a Depth image of the image hidden behind the object, and
the reproducing apparatus reproduces, in addition to the Depth image, the image hidden behind the object and the Depth image of the image hidden behind the object which correspond to image data of the second data structure when the display unit employing the second video-image display method is used.

5. A reproducing method employed in a reproducing apparatus which reproduces image data having a data structure including
a first data structure which is used in a first 3D (three dimensional) video-image display method in which an L image for a left eye and an R image for a right eye are used and which includes image data corresponding to the L image and image data corresponding to the R image used for display, and
a second data structure which is used in a second 3D video-image display method in which an image viewed from three or more viewpoints is generated using at least a two-dimensional image and a Depth image and which includes at least image data corresponding to the Depth image when the L image or the R image of the first data structure is employed as the two-dimensional image,
the reproducing method comprising the steps of:
reproducing the image data corresponding to the L image and the image data corresponding to the R image obtained from among image data of the first data structure in a case where a display unit employing the first video-image display method is used, and
reproducing the image data corresponding to the L image or the R image of the first data structure is reproduced and the Depth image of the second data structure in a case where a display unit employing the second video-image display method is used.

6. A program which causes a computer which executes a process of controlling reproduction of image data having a data structure including
a first data structure which is used in a first 3D (three dimensional) video-image display method in which an L image for a left eye and an R image for a right eye are used and which includes image data corresponding to the L image and image data corresponding to the R image used for display, and
a second data structure which is used in a second 3D video-image display method in which an image viewed from three or more viewpoints is generated using at least a two-dimensional image and a Depth image and which includes at least image data corresponding to the Depth image when the L image or the R image of the first data structure is employed as the two-dimensional image,
to perform the control process comprising the steps of:
reproducing the image data corresponding to the L image and the image data corresponding to the R image obtained from among image data of the first data structure in a case where a display unit employing the first video-image display method is used, and
reproducing the image data corresponding to the L image or the R image of the first data structure and reproducing the Depth image of the second data structure in a case where a display unit employing the second video-image display method is used.
